# EUROPEAN PATENT SPECIFICATION

(11) **EP 2 139 189 B1**
(45) Date of publication and mention of the grant of the patent: **01.08.2012**
(21) Application number: 08748586.8
(22) Date of filing: 16.05.2008
(51) Int. Cl.: H04L 12/26, H04L 29/06, H04L 12/46, H04L 29/08, H04L 12/28

(54) **METHOD AND SYSTEM FOR PERFORMING KEEPALIVE MONITORING ON CLIENT SESSIONS**
VERFAHREN UND SYSTEM ZUR DURCHFÜHRUNG VON KEEPALIVE-ÜBERWACHUNGEN IN CLIENT-SITZUNGEN
PROCÉDÉ ET SYSTÈME SERVANT À RÉALISER UN CONTRÔLE D'ENTRETIEN SUR DES SESSIONS CLIENTS

(30) Priority: 21.05.2007 CN 200710107596
(43) Date of publication of application: 30.12.2009
(73) Proprietor: Huawei Technologies Co., Ltd., Longgang District, Shenzhen Guangdong 518129 (CN)
(72) Inventor: ZHENG, Ruobin c/o Huawei Technologies Co.Ltd., Longgang District 518129, Shenzhen (CN)
(74) Representative: Kreuz, Georg Maria
(86) International application number: PCT/CN2008/070980
(87) International publication number: WO 2008/141572

(56) References cited:
- EP-A1- 2 136 506
- WO-A1-2006/136660
- US-A- 5 781 726
- US-A1- 2003 128 676
- US-A1- 2004 264 381
- US-A1- 2004 264 381
- US-A1- 2006 182 141
- US-A1- 2007 076 607
- NADEAU (ED) C PIGNATARO (ED) CISCO SYSTEMS T ET AL: "Pseudo Wire Virtual Circuit Connectivity Verification (VCCV); draft-ietf-pwe3-vccv-13.txt" IETF STANDARD-WORKING-DRAFT, INTERNET ENGINEERING TASK FORCE, IETF, CH, vol. pwe3, no. 13, 1 March 2007 (2007-03-01), XP015049749 ISSN: 0000-0004

## Description

### FIELD OF THE INVENTION

The present invention relates to the field of communication, and more particularly to a method for performing keep-alive monitoring on subscriber sessions.

### BACKGROUND OF THE INVENTION

In order to enable an access network to support new services, devices of the access network need to be added with a control function, and devices capable of supporting the control function are needed to control all the devices accessing the access network.

In the access network, an Internet Protocol (IP) session represents a network access session associated with an IP address of a subscriber or user. The IP session and a Point-to-Point Protocol (PPP) session are peer-to-peer.

The IP session and the PPP session are collectively referred to as a subscriber session. The subscriber session is generally terminated at an IP edge device, that is, the subscriber session is a session established between a user terminal and an IP edge device. The IP edge device may be a broadband network gateway (BNG), a broadband remote access server (BRAS), or the like. The user terminal may be a customer premises equipment (CPE), a residential gateway (RG), a user equipment (UE), or the like.

An IP address of a subscriber or user is an essential part in identifying parameters of a subscriber session and in an authentication process. The IP address is generally managed and maintained by a Dynamic Host Control Protocol (DHCP) server, that is, the IP address required for the subscriber session is requested from the DHCP server. The subscriber session is used to manage the user's access to a network, such as charging and status control.

In an existing subscriber session mechanism, session keep-alive monitoring, session termination, and other operations are performed based on each session. For example, assuming that each IP edge device, such as a BNG/BRAS, supports 5,000 access nodes (ANs), each AN supports 1,000 digital subscriber lines (DSLs), and each DSL supports one PPP session and three IP sessions, each IP edge device supports 20,000,000 subscriber sessions. Assuming that a keep-alive monitoring mechanism based on each subscriber session has a monitoring period of one minute, each IP edge device sends 20,000,000 subscriber session keep-alive monitoring messages per minute. Thereby, each IP edge device needs to process a large volume of traffic in real time when performing keep-alive monitoring on the subscriber sessions, and as a result, the real-time processing load of each IP edge device for the subscriber sessions is increased, and the processing delay is prolonged.

US 2004/264381 Al (BANERJEE DWIP N [US] ET AL) 30 December 2004 aims to disclose a method for managing keepalive transmissions, and it discloses that a keepalive packet is received from a remote data processing over a particular connection within a set of connections to the remote data processing system.

NADEAU (ED) C PIGNATARO (ED) CISCO SYSTEMS T ET AL: "Pseudo Wire Virtual Circuit Connectivity Verification (VCCV); draft-ietf-pwe3-vccv-13.txt" IETF STANDARD-WORKING-DRAFT, INTERNET ENGINEERING TASK FORCE, IETF, CH, vol.pwe3, no.13, 1 March 2007 describes Virtual Circuit Connection Verification (VCCV) procedures for use with pseudo wire connections, and it discloses that BFD (Bidirectional Forward mechanism) mechanism can be used to detect fault of the pseudo wire between two PEs.

US 5781 726A (PEREIRA FRANK R [US]) 14 July 1998 serves for managing the traffic involved in maintaining a set of connection oriented sessions between end stations in a network, it discloses that selecting a member of a set of connection oriented sessions as a polling session to maintain the intermediate link, the polling session is changed from one to another member of the managed set of the connection oriented sessions.

US 2007/076607 Al (VOIT ERIC [US] ET AL) 5 April 2007 (2007-04-05) aims to provide quality of service based on logical port identifier for broadband aggregation networks, and it discloses that more than there can be more than one subscriber session, which can be grouped as a session group, the session group need not come into existence until more than one subscriber session is seen on a single physical link from the subscriber' premises.

### SUMMARY OF THE INVENTION

The invention provides a method according to claim 1 and a system according to claim 3. A preferred embodiment of the invention is covered by dependent claim 2.

Various embodiments of the present invention provide a method and system for performing keep-alive monitoring on subscriber sessions, which can reduce the real-time processing traffic of an IP edge device for the subscriber sessions, so as to lower the real-time processing load of the IP edge device for the subscriber sessions, and increase the real-time processing rate of the IP edge device for the subscriber sessions.

It can be seen from the technical solutions of the present invention that, keep-alive monitoring is performed on a subscriber session group, and a keep-alive monitoring result of the subscriber session group serves as a keep-alive monitoring result of a plurality of subscriber sessions in the subscriber session group, so that the subscriber sessions in the subscriber session group can be processed in batches, and the real-time processing traffic of an IP edge device for the subscriber sessions is reduced, thereby lowering the real-time processing load of the IP edge device for the subscriber sessions, and increasing the real-time processing rate of the IP edge device for the subscriber sessions.

### BRIEF DESCRIPTION OF THE DRAWINGS

FIG. 1 is a flow chart of a first embodiment of the present invention;
FIG. 2 is a schematic view of data transmission in a data plane in a non-roaming scenario according to a first embodiment of the present invention;
FIG. 3 is a schematic view of a first keep-alive monitoring mechanism in the non-roaming scenario according to the first embodiment of the present invention;
FIG. 4 is a schematic view of a second keep-alive monitoring mechanism in the non-roaming scenario according to the first embodiment of the present invention;
FIG. 5 is a flow chart of a first keep-alive monitoring process in the non-roaming scenario according to the first embodiment of the present invention;
FIG. 6 is a flow chart of a second keep-alive monitoring process in the non-roaming scenario according to the first embodiment of the present invention;
FIG. 7 is a flow chart of a second embodiment of the present invention;
FIG. 8 is a schematic view of data transmission in a data plane in a roaming scenario according to a second embodiment of the present invention;
FIG. 9 is a schematic view of a keep-alive monitoring mechanism in the roaming scenario according to the second embodiment of the present invention;
FIG. 10 is a flow chart of a first keep-alive monitoring process in the roaming scenario according to the second embodiment of the present invention;
FIG. 11 is a flow chart of a second keep-alive monitoring process in the roaming scenario according to the second embodiment of the present invention;
FIG. 12 is a schematic view of data transmission in a data plane in a roaming scenario according to a third embodiment of the present invention;
FIG. 13 is a schematic view of a first keep-alive monitoring mechanism in the roaming scenario according to the third embodiment of the present invention;
FIG. 14 is a schematic view of a second keep-alive monitoring mechanism in the roaming scenario according to the third embodiment of the present invention;
FIG. 15 is a flow chart of a first keep-alive monitoring process in the roaming scenario according to the third embodiment of the present invention;
FIG. 16 is a flow chart of a second keep-alive monitoring process in the roaming scenario according to the third embodiment of the present invention;
FIG. 17 is a schematic view of data transmission in a data plane in a non-roaming scenario according to a fourth embodiment of the present invention;
FIG. 18 is a schematic view of data transmission in the data plane in a roaming scenario according to the fourth embodiment of the present invention;
FIG. 19 is a schematic view of a keep-alive monitoring mechanism in the roaming scenario according to the fourth embodiment of the present invention;
FIG. 20 is a schematic view of data transmission in a data plane in a roaming scenario according to a fifth embodiment of the present invention; and
FIG. 21 is a flow chart of a keep-alive monitoring process in the roaming scenario according to the fifth embodiment of the present invention.

### DETAILED DESCRIPTION OF THE EMBODIMENTS

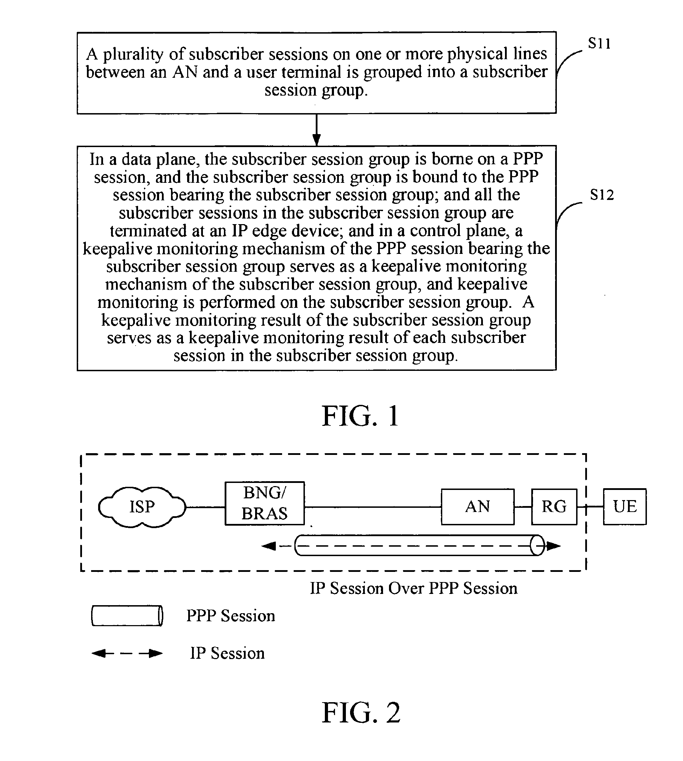

In a first embodiment, the present invention provides a method for performing keep-alive monitoring on subscriber sessions, which is applicable to a non-roaming scenario. Referring to FIG. 1, the method includes the following steps.

In Step S11, a plurality of subscriber sessions on one or more physical lines between an AN and a user terminal is grouped into a subscriber session group.

A plurality of subscriber sessions on one or more physical lines between an AN and a user terminal may be grouped into a subscriber session group according to system configuration information or policy information obtained from a policy server (PS).

A subscriber session may be borne on a plurality of physical lines between an AN and a user terminal, and the subscriber session group may be constituted by a plurality of subscriber sessions (a plurality of IP/PPP sessions and a PPP session bearing the IP sessions) on a plurality of physical lines (including wired or wireless lines) between an AN and a user terminal. Alternatively, a subscriber session may be only borne on one physical line between an AN and a user terminal, and the subscriber session group may be constituted by a plurality of subscriber sessions on a physical line (including a wired or wireless line) between an AN and a user terminal.

The subscriber sessions in the subscriber session group may include a plurality of PPP sessions, or include at least one IP session and at least one PPP session. The user terminal may be a customer premises equipment (CPE), a residential gateway (RG), a user equipment (UE), or the like.

After the corresponding subscriber session group is obtained, keep-alive monitoring is performed on the subscriber session group. A specific process is as follows.

In Step S 12, in a data plane, the subscriber session group is borne on a PPP session, and the subscriber session group is bound to the PPP session bearing the subscriber session group; and all the subscriber sessions in the subscriber session group are terminated at an IP edge device; and in a control plane, a keep-alive monitoring mechanism of the PPP session bearing the subscriber session group serves as a keep-alive monitoring mechanism of the subscriber session group, and keep-alive monitoring is performed on the subscriber session group. A keep-alive monitoring result of the subscriber session group serves as a keep-alive monitoring result of each subscriber session in the subscriber session group.

When it is monitored that the PPP session bearing the subscriber session group is abnormal or terminated, charging for all the subscriber sessions in the subscriber session group is stopped, IP addresses associated with all the subscriber sessions in the subscriber session group are released, and/or all the subscriber sessions in the subscriber session group are terminated.

FIG. 2 is a schematic view of data transmission in a data plane in a non-roaming scenario. Referring to FIG. 2, a subscriber session group constituted by at least one IP session and at least one PPP session may be borne on one PPP session in the subscriber session group, and then bound to the PPP session bearing the subscriber session group; and a subscriber session group constituted by a plurality of PPP sessions may be borne on one PPP session in the subscriber session group, and then bound to the PPP session bearing the subscriber session group.

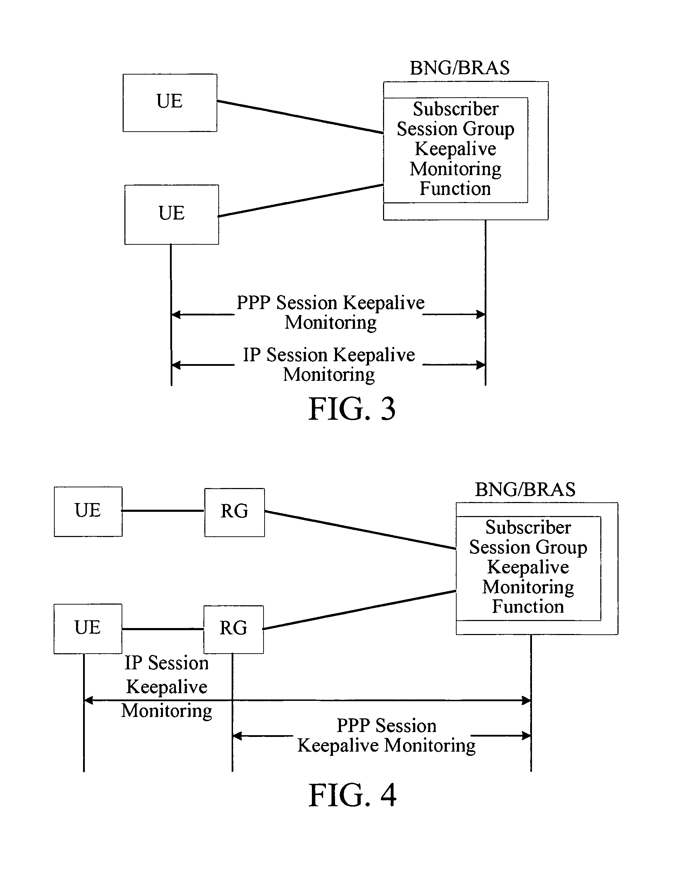

For processing in a control plane in the non-roaming scenario, IP session and PPP session keep-alive monitoring mechanisms as shown in FIG. 3 are illustrated as an example. Referring to FIG. 3, for a subscriber session group constituted by at least one IP session and at least one PPP session, a keep-alive monitoring mechanism of a PPP session bearing the subscriber session group may be used as a keep-alive monitoring mechanism of the subscriber session group. The IP session and PPP session in the subscriber session group are originated at a user terminal such as a UE, and terminated at an IP edge device such as a BNG or BRAS.

The IP edge device such as the BNG or BRAS supports a subscriber session group keep-alive monitoring function. The user terminal may be a UE as shown in FIG. 3, or an RG with an attached UE as shown in FIG. 4, or a CPE.

For a subscriber session group constituted by a plurality of PPP sessions, a keep-alive monitoring mechanism of a PPP session bearing the subscriber session group may be used as a keep-alive monitoring mechanism of the subscriber session group. The PPP sessions are originated at a user terminal, and terminated at an IP edge device.

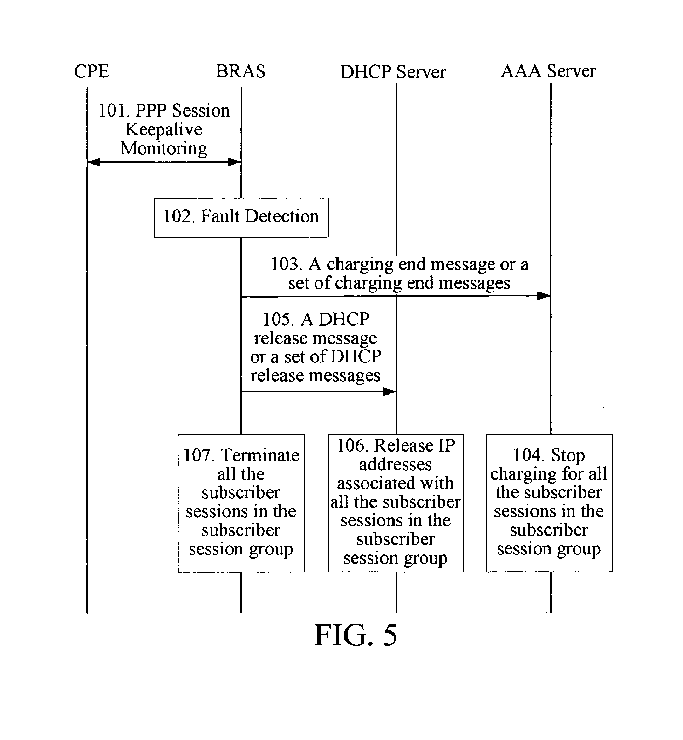

In the non-roaming scenario, assuming that the user terminal is a CPE and the IP edge device is a BRAS, a process for performing keep-alive monitoring on the subscriber session group in the control plane includes the following steps, as shown in FIG. 5.

In Step S101, a keep-alive monitoring mechanism of the PPP session bearing the subscriber session group is used to perform keep-alive monitoring on the subscriber session group between the CPE and the BRAS: the BRAS periodically or selectively delivers an Echo-Requests message to the PPP session peer (for example, the CPE/RG/UE); and under a normal condition, the BRAS receives an Echo-Replies message from the PPP session peer within a predetermined period of time.

In Step S102, fault detection is performed: when the BRAS fails to receive the Echo-Replies message from the PPP session peer within the predetermined period of time, it indicates that the PPP session bearing the subscriber session group is abnormal, and thus it is determined that the subscriber session group is abnormal.

In Step S103, the BRAS generates a charging end message or a set of charging end messages for the subscriber session group, and sends the charging end message or the set of charging end messages to an authentication, authorization, and accounting (AAA) server, so as to stop charging for all the subscriber sessions in the subscriber session group.

In Step S104, after receiving the charging end message or the set of charging end messages, the AAA server stops charging for all the subscriber sessions in the subscriber session group.

In Step S105, the BRAS generates a DHCP release message or a set of DHCP release messages for the subscriber session group, and sends the DHCP release message or the set of DHCP release messages to a DHCP server, so as to release IP addresses associated with all the subscriber sessions in the subscriber session group.

In Step S106, after receiving the DHCP release message or the set of DHCP release messages, the DHCP server releases IP addresses associated with all the subscriber sessions in the subscriber session group. The DHCP server may also send a connection release indication message to a location server so as to notify the location server to release a corresponding connection.

In Step S107, the BRAS terminates all the subscriber sessions in the subscriber session group.

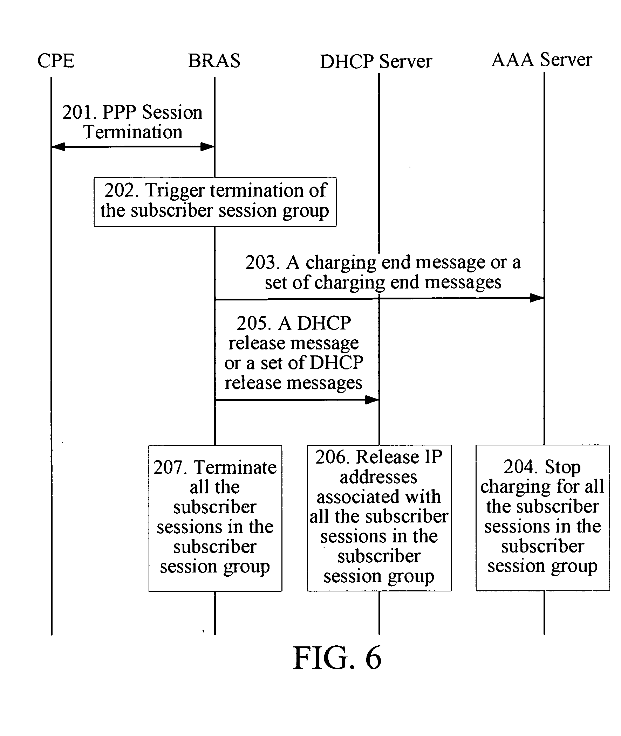

In the non-roaming scenario, assuming that the user terminal is a CPE and the IP edge device is a BRAS, a process for terminating sessions in the subscriber session group in the control plane includes the following steps, as shown in FIG. 6.

In Step S201, the PPP session bearing the subscriber session group is terminated: the PPP session peer terminates the link by exchanging Terminate packets.

The PPP session is terminated for various reasons, including the loss of carrier, authentication failure, link quality failure, the expiration of an idle-period timer, or the administrative closing of the link. When the BRAS requests for terminating the PPP session for a reason, the BRAS sends a Terminate-Request message to the PPP session peer, and terminates the PPP session after receiving a Terminate-Ack message from the PPP session peer or after the timer expires after being reset.

After receiving a Terminate-Request message from the PPP session peer, the BRAS waits for the PPP session peer to terminate the PPP session.

In Step S202, termination of the subscriber session group is triggered: after the PPP session bearing the subscriber session group is terminated, the IP edge device triggers the following procedure for terminating the subscriber session group.

Steps S203 to S207 are similar to Steps S103 to S107 in FIG. 5, so the details will not be described herein again.

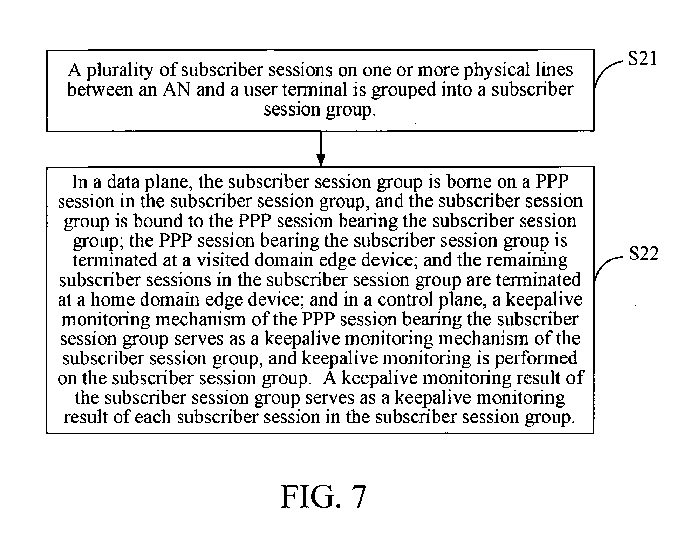

In a second embodiment, the present invention further provides a method for performing keep-alive monitoring on subscriber sessions, which is applicable to a roaming scenario. Referring to FIG. 7, the method includes the following steps.

In Step S21, a plurality of subscriber sessions on one or more physical lines between an AN and a user terminal is grouped into a subscriber session group.

A plurality of subscriber sessions on one or more physical lines between an AN and a user terminal may be grouped into a subscriber session group according to system configuration information or policy information obtained from a PS.

Detailed description about this part is similar to the related description in the first embodiment, so the details will not be described herein again. The subscriber sessions include at least one IP session and at least one PPP session, or include a plurality of PPP sessions.

In Step S22, in a data plane, the subscriber session group is borne on a PPP session in the subscriber session group, and the subscriber session group is bound to the PPP session bearing the subscriber session group; the PPP session bearing the subscriber session group is terminated at a visited domain edge device; and the remaining subscriber sessions in the subscriber session group are terminated at a home domain edge device; and in a control plane, a keep-alive monitoring mechanism of the PPP session bearing the subscriber session group serves as a keep-alive monitoring mechanism of the subscriber session group, and keep-alive monitoring is performed on the subscriber session group. A keep-alive monitoring result of the subscriber session group serves as a keep-alive monitoring result of each subscriber session in the subscriber session group.

When it is monitored that the PPP session bearing the subscriber session group is abnormal or terminated, charging for all the subscriber sessions in the subscriber session group is stopped, IP addresses associated with all the subscriber sessions in the subscriber session group are released, and/or all the subscriber sessions in the subscriber session group are terminated.

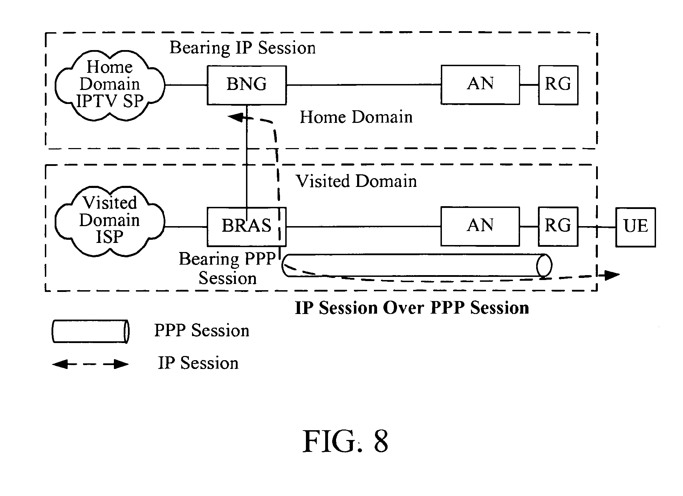

As a home domain network and a visited domain network are introduced in the roaming scenario, processing on the subscriber session group in the data plane is shown in FIG. 8. Referring to FIG. 8, the subscriber session group is borne on a PPP session in the subscriber session group, and the subscriber session group is bound to the PPP session bearing the subscriber session group; the PPP session bearing the subscriber session group is terminated at a visited domain edge device; and the remaining subscriber sessions in the subscriber session group are terminated at a home domain edge device.

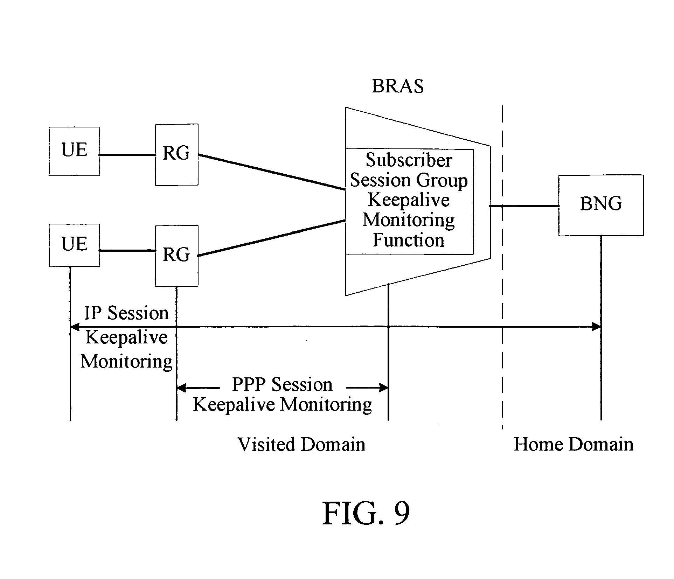

In the roaming scenario, assuming that a visited domain IP edge device is a BRAS, a home domain IP edge device is a BNG, the user terminal is an RG with an attached UE, and the subscriber session group is constituted by at least one IP session and at least one PPP session, a keep-alive monitoring mechanism of the subscriber session group in the control plane is shown in FIG. 9. Referring to FIG. 9, the PPP session bearing the subscriber session group is terminated at the visited domain IP edge device (for example, a BRAS supporting a subscriber session group keep-alive monitoring function), and the IP session is terminated at the home domain IP edge device (for example, a BNG supporting the subscriber session group keep-alive monitoring function). In addition, a keep-alive monitoring mechanism of the PPP session bearing the subscriber session group may be used as a keep-alive monitoring mechanism of the subscriber session group.

FIG. 9 only shows the scenario in which the user terminal is an RG with an attached UE. However, this embodiment is also applicable to scenarios in which the user terminal is a CPE or a UE.

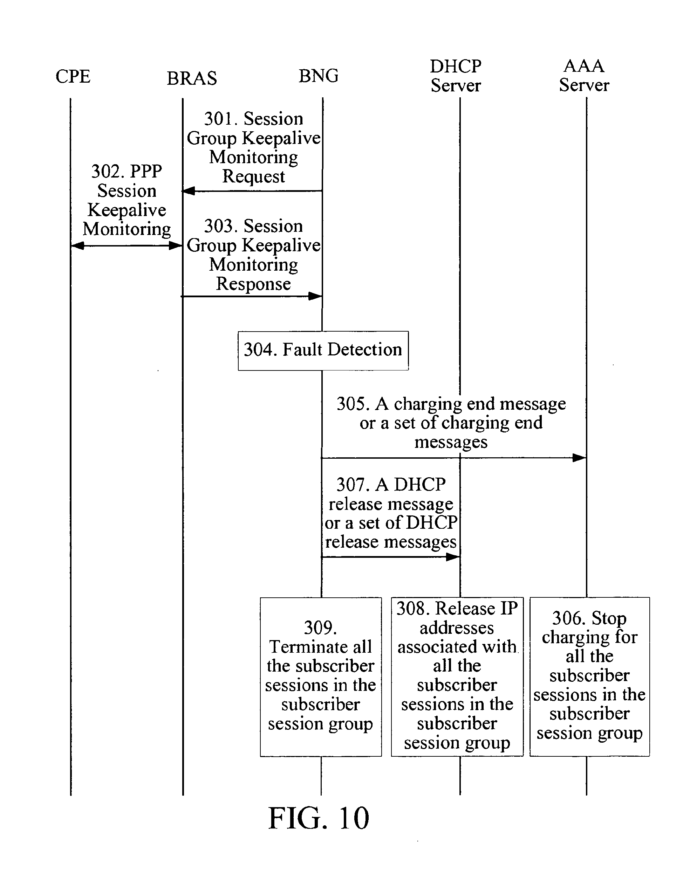

In the roaming scenario, corresponding to FIG. 9, a keep-alive monitoring process in the control plane includes the following steps, as shown in FIG. 10.

In Step S301, optionally, the home domain IP edge device (BNG) delivers a session group keep-alive monitoring request to initiate keep-alive monitoring on the PPP session, which may be completed by using a Layer 2 Control (L2C) message.

Step S302 is the same as Step S101 in FIG. 5.

In Step S303, the visited domain IP edge device (BRAS) reports a session group keep-alive monitoring result to the BNG, which may also be completed by using an L2C message.

In Step S304, fault detection is performed: when the BNG fails to receive the session group keep-alive monitoring result within a predetermined period of time or receives a false session group keep-alive monitoring result, or the received session group keep-alive monitoring result indicates that the PPP session bearing the subscriber session group is abnormal, it is determined that the subscriber session group is abnormal.

Steps S305 to S309 are the same as Steps S 103 to S107 in FIG. 5.

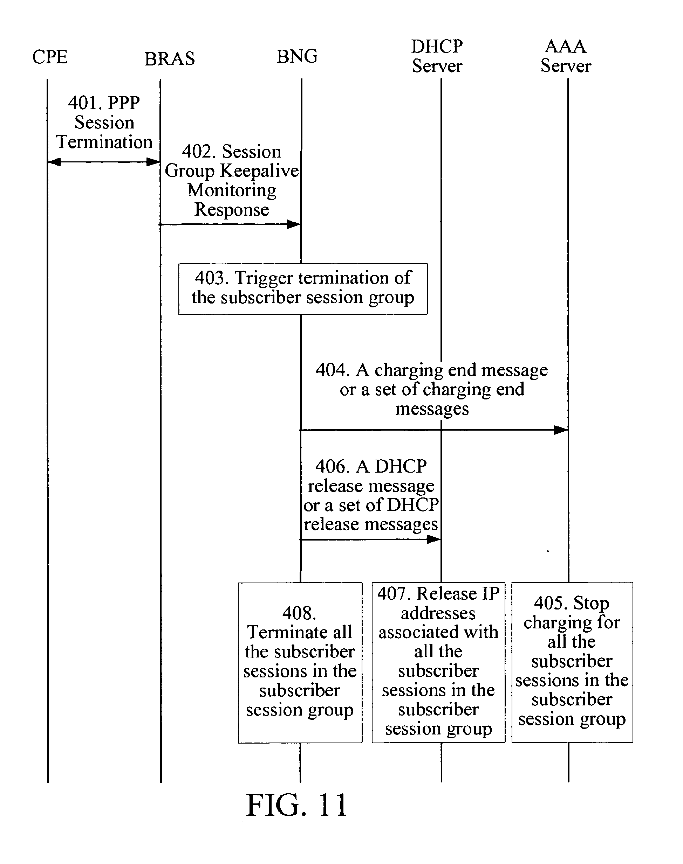

In the roaming scenario, corresponding to FIG. 9, a session termination process in the keep-alive monitoring process in the control plane includes the following steps, as shown in FIG. 11.

Step S401 is the same as Step S201 in FIG. 6.

In Step S402, the visited domain IP edge device (BRAS) reports a session group keep-alive monitoring result to the home domain IP edge device (BNG), which may be completed by using an L2C message.

Steps S403 to S408 are the same as Steps S202 to S207 in FIG. 6.

In a third embodiment, the present invention further provides a method for performing keep-alive monitoring on subscriber sessions, which is only applicable to a roaming scenario. The method includes the following steps.

A plurality of subscriber sessions on one or more physical lines between an AN and a user terminal is grouped into a subscriber session group.

A plurality of subscriber sessions on one or more physical lines between an AN and a user terminal may be grouped into a subscriber session group according to system configuration information or policy information obtained from a PS. The subscriber sessions include at least one IP session and at least one PPP session, or include a plurality of PPP sessions.

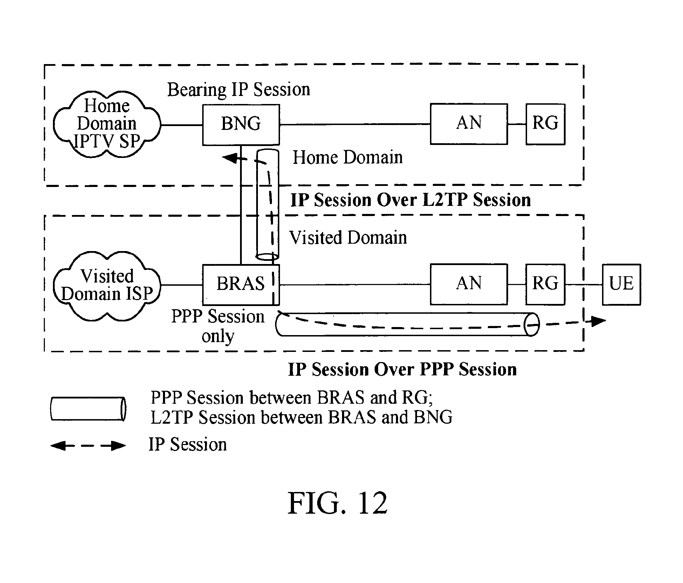

For data transmission, reference is made to FIG. 12. In a data plane, processing may be performed by the following two methods.

Method 1: in the data plane, the subscriber session group is borne on a PPP session in the subscriber session group between a visited domain edge device and a user terminal, and the PPP session bearing the subscriber session group is terminated at the visited domain edge device; the remaining subscriber sessions in the subscriber session group are borne on an L2TP session between the visited domain edge device and a home domain edge device, and the remaining subscriber sessions are terminated at the home domain edge device; the PPP session bearing the subscriber session group is bound to the L2TP session; and the subscriber session group is bound to the PPP session bearing the subscriber session group.

Method 2: in the data plane, the subscriber session group is borne on a PPP session in the subscriber session group between a visited domain edge device and a user terminal; the PPP session bearing the subscriber session group is borne on an L2TP session between the visited domain edge device and a home domain edge device, and all the subscriber sessions in the subscriber session group are terminated at the home domain edge device; the PPP session bearing the subscriber session group is bound to the L2TP session bearing the PPP session; and the subscriber session group is bound to the PPP session bearing the subscriber session group.

In a control plane, a keep-alive monitoring mechanism of a PPP session bearing the subscriber session group serves as a keep-alive monitoring mechanism of the subscriber session group between a visited domain edge device and a user terminal, and keep-alive monitoring is performed on the subscriber session group; and/or a keep-alive monitoring mechanism of an L2TP session bearing the subscriber session group serves as a keep-alive monitoring mechanism of the subscriber session group between the visited domain edge device and a home domain edge device, and keep-alive monitoring is performed on the subscriber session group. A keep-alive monitoring result of the subscriber session group serves as a keep-alive monitoring result of each subscriber session in the subscriber session group.

When it is monitored that the PPP or L2TP session bearing the subscriber session group is abnormal or terminated, charging for all the subscriber sessions in the subscriber session group is stopped, IP addresses associated with all the subscriber sessions in the subscriber session group are released, and/or all the subscriber sessions in the subscriber session group are terminated.

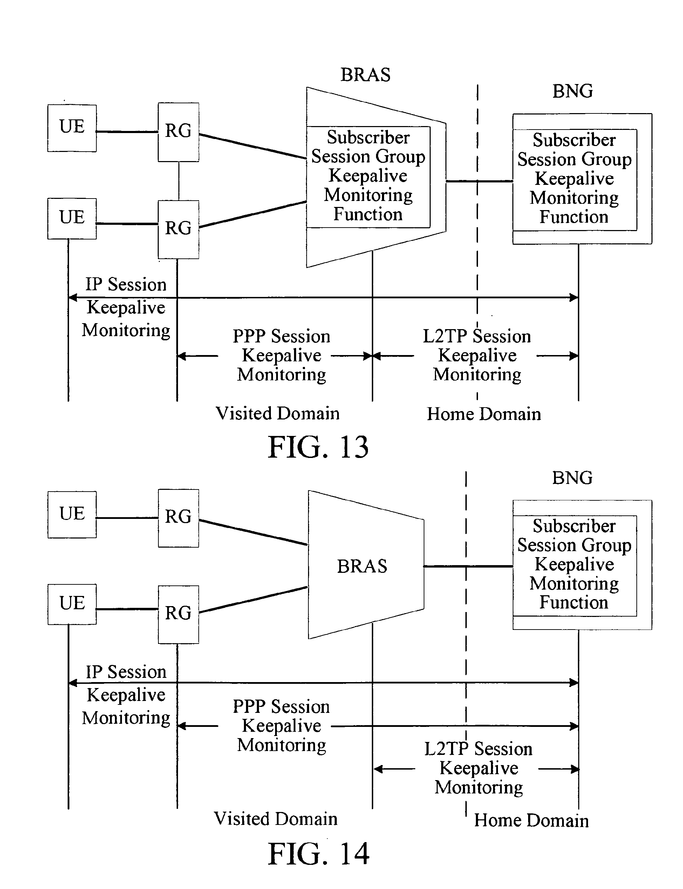

Corresponding to Method 1 for the processing in the data plane, assuming that the subscriber session group is constituted by at least one IP session and at least one PPP session, a keep-alive monitoring method is shown in FIG. 13. Referring to FIG. 13, the subscriber session group is borne on a PPP session in the subscriber session group between a visited domain IP edge device (BRAS) and a user terminal, a keep-alive monitoring mechanism of the PPP session bearing the subscriber session group serves as a keep-alive monitoring mechanism of the subscriber session group, keep-alive monitoring is performed on the subscriber session group, and the PPP session is terminated at the BRAS. The at least one IP session in the subscriber session group is borne on an L2TP session between the visited domain IP edge device (BRAS) and a home domain IP edge device (BNG), a keep-alive monitoring mechanism of the L2TP session bearing the subscriber session group serves as a keep-alive monitoring mechanism of the subscriber session group, keep-alive monitoring is performed on the subscriber session group, and the IP session and the L2TP session are terminated at the home domain IP edge device (BNG).

Corresponding to Method 2 for the processing in the data plane, assuming that the subscriber session group is constituted by at least one IP session and at least one PPP session, a keep-alive monitoring method is shown in FIG. 14. Referring to FIG. 14, the subscriber session group is borne on a PPP session in the subscriber session group between a visited domain IP edge device (BRAS) and a user terminal, a keep-alive monitoring mechanism of the PPP session bearing the subscriber session group serves as a keep-alive monitoring mechanism of the subscriber session group, keep-alive monitoring is performed on the subscriber session group, and the PPP session and the IP session are not terminated at the BRAS. The at least one IP session and the at least one PPP session in the subscriber session group are borne on an L2TP session between the visited domain IP edge device (BRAS) and a home domain IP edge device (BNG), a keep-alive monitoring mechanism of the L2TP session bearing the subscriber session group serves as a keep-alive monitoring mechanism of the subscriber session group, keep-alive monitoring is performed on the subscriber session group, and the IP session, the PPP session, and the L2TP session are terminated at the home domain IP edge device (BNG).

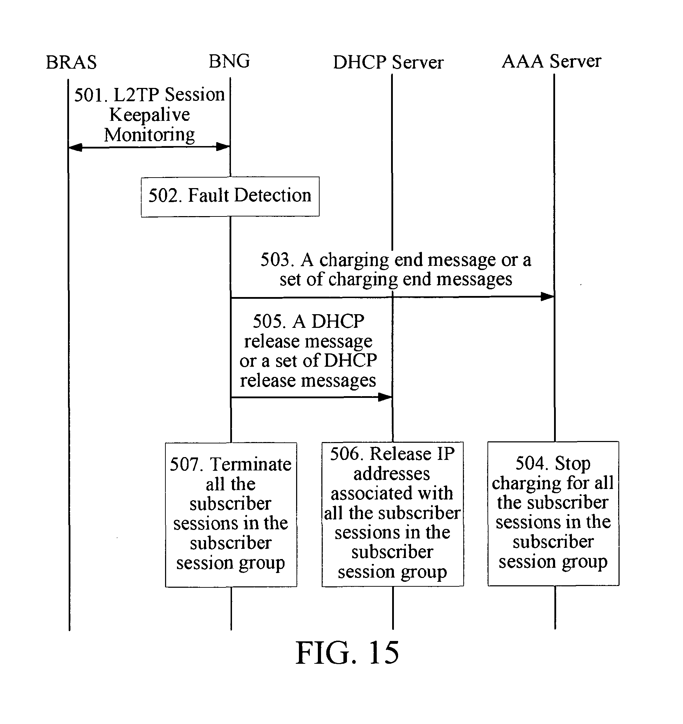

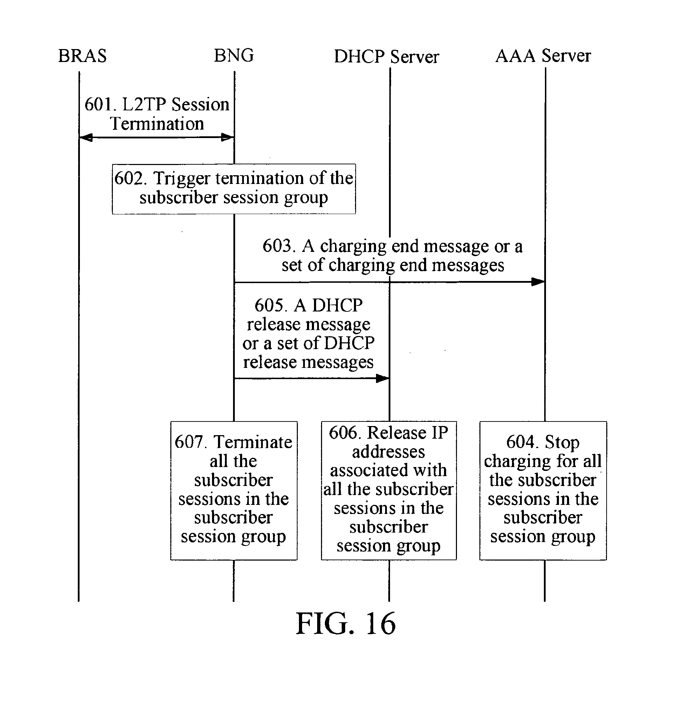

As can be seen from the above, the keep-alive monitoring process in this embodiment includes two parts. Part 1: a keep-alive monitoring process in the second embodiment, as shown in FIGs. 10 and 11, that is, a keep-alive monitoring process between the visited domain IP edge device (BRAS) and the user terminal, is performed. Part 2: a keep-alive monitoring process between the visited domain IP edge device (BRAS) and the home domain IP edge device (BNG), as shown in FIGs. 15 and 16, is performed.

Referring to FIG. 15, the keep-alive monitoring process between the visited domain IP edge device (BRAS) and the home domain IP edge device (BNG) includes the following steps.

In Step S501, a keep-alive monitoring mechanism of an L2TP session is used to perform keep-alive monitoring on the subscriber session group between the BRAS and the BNG: one end of the L2TP session sends a Hello message to the L2TP session peer within a predetermined period of time after receiving the previous data or control packet, and if the Hello message is not reliably delivered, the L2TP session is terminated or reset.

In Step S502, fault detection is performed: when the BNG fails to receive a session group keep-alive monitoring result within a predetermined period of time or receives a false session group keep-alive monitoring result, or the received session group keep-alive monitoring result indicates that the L2TP session is abnormal, it is determined that the subscriber session group is abnormal.

Steps S503 to S507 are the same as Steps S305 to S309 in FIG. 10.

Referring to FIG. 16, the keep-alive monitoring process between the visited domain IP edge device (BRAS) and the home domain IP edge device (BNG) includes the following steps.

In Step S601, an L2TP session is terminated.

One end of the L2TP session receives a zero-length-body acknowledgement (ZLB ACK) from the L2TP session peer after sending a Call-Disconnect-Notify message, and then terminates the L2TP session.

In Step S602, termination of the subscriber session group is triggered: after the L2TP session is terminated, the BNG triggers the following procedure for terminating the subscriber session group.

Steps S603 to S607 are the same as Steps S404 to S408 in FIG. 11.

In a fourth embodiment, the present invention further provides a method for performing keep-alive monitoring on subscriber sessions, which is applicable to both a non-roaming scenario and a roaming scenario. The method includes the following steps.

In Step S41, a plurality of subscriber sessions on one or more physical lines between an AN and a user terminal is grouped into a subscriber session group.

The subscriber sessions in the subscriber session group may include a plurality of IP sessions or a plurality of PPP sessions, or include at least one IP session and at least one PPP session.

In Step S41, according to system configuration information or policy information obtained from a PS, a plurality of IP sessions and a plurality of PPP sessions on a plurality of physical lines (including wired or wireless lines) between an AN and a user terminal (for example, a CPE/RG/UE) may be grouped into a subscriber session group. Alternatively, a plurality of IP sessions and a plurality of PPP sessions on a physical line (including a wired or wireless line) between an AN and a user terminal (for example, a CPE/RG/UE) may be grouped into a subscriber session group.

In Step S42, in a data plane, the subscriber sessions in the subscriber session group are separately transmitted, and all the subscriber sessions in the subscriber session group are terminated at a home domain edge device; and in a control plane, a keep-alive monitoring mechanism of a subscriber session in the subscriber session group serves as a keep-alive monitoring mechanism of the subscriber session group, and keep-alive monitoring is performed on the subscriber session group.

If the subscriber session group is only constituted by a plurality of IP sessions, in the data plane, the IP sessions in the subscriber session group are separately transmitted; and in the control plane, a keep-alive monitoring mechanism of an IP session serves as a keep-alive monitoring mechanism of the subscriber session group, and keep-alive monitoring is performed on the subscriber session group. When it is monitored that the IP session is abnormal or terminated, charging for all the subscriber sessions in the subscriber session group is stopped, IP addresses associated with all the subscriber sessions in the subscriber session group are released, and/or all the subscriber sessions in the subscriber session group are terminated.

If the subscriber session group is only constituted by a plurality of PPP sessions, in the data plane, the PPP sessions in the subscriber session group are separately transmitted; and in the control plane, a keep-alive monitoring mechanism of a PPP session serves as a keep-alive monitoring mechanism of the subscriber session group, and keep-alive monitoring is performed on the subscriber session group. When it is monitored that the PPP session is abnormal or terminated, charging for all the subscriber sessions in the subscriber session group is stopped, IP addresses associated with all the subscriber sessions in the subscriber session group are released, and/or all the subscriber sessions in the subscriber session group are terminated.

If the subscriber session group is constituted by at least one IP session and at least one PPP session, in the data plane, the at least one IP session and the at least one PPP session are separated from each other, and the at least one IP session and the at least one PPP session in the subscriber session group are separately transmitted; and in the control plane, a keep-alive monitoring mechanism of an PPP or IP session serves as a keep-alive monitoring mechanism of the subscriber session group, and keep-alive monitoring is performed on the subscriber session group. When it is monitored that the PPP or IP session is abnormal or terminated, charging for all the subscriber sessions in the subscriber session group is stopped, IP addresses associated with all the subscriber sessions in the subscriber session group are released, and/or all the subscriber sessions in the subscriber session group are terminated.

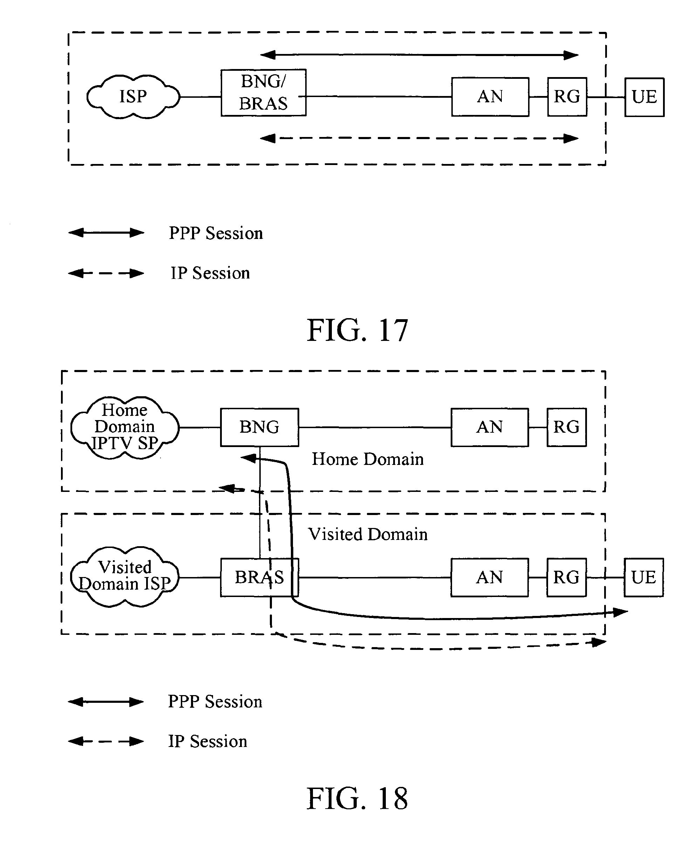

In the non-roaming scenario, data transmission in the data plane for the subscriber session group constituted by at least one IP session and at least one PPP session is shown in FIG. 17. Referring to FIG. 17, the at least one IP session and the at least one PPP session are separated from each other, and are separately transmitted.

In the non-roaming scenario, in the control plane, a keep-alive monitoring mechanism corresponding to the subscriber session group constituted by at least one IP session and at least one PPP session is shown in FIG. 3, so the details will not be described herein again.

In the non-roaming scenario, a keep-alive monitoring process corresponding to the subscriber session group constituted by at least one IP session and at least one PPP session is different from FIG. 5 in the following aspects.

In this embodiment, firstly, between the user terminal and the IP edge device, not only a keep-alive monitoring mechanism of a PPP session may be used to perform keep-alive monitoring on the subscriber session group, but a keep-alive monitoring mechanism of an IP session may also be used as a keep-alive monitoring mechanism of the subscriber session group to perform keep-alive monitoring on the subscriber session group. The IP edge device may perform keep-alive monitoring on the IP session or the PPP session by monitoring the user traffic of the IP session or the PPP session, or by using an active Address Resolution Protocol (ARP)/Bidirectional Forwarding Detection (BFD)/Internet Control Message Protocol (ICMP), or by using physical layer or link layer status information and an Operation, Administration & Maintenance (OAM) mechanism.

Then, fault detection is performed: when the IP edge device detects that the PPP session or the IP session is abnormal, it is determined that the subscriber session group is abnormal.

Other steps are similar to Steps S103 to S107 in FIG. 5, so the details will not be described herein again.

In the non-roaming scenario, the keep-alive monitoring process corresponding to the subscriber session group constituted by at least one IP session and at least one PPP session is different from FIG. 6 in the following aspects.

In this embodiment, firstly, the PPP session or the IP session is terminated.

Here, the termination of the PPP session is similar to Step S107 in FIG. 5.

The termination of the IP session mainly includes three situations.

In a first situation, the DHCP lease expires, or a DHCP user initiates a DHCP release.

In a second situation, the IP edge device (BNG/BRAS) terminates the IP session by delivering a command via a command line interface (CLI), an AAA server, a PS, or an application server (AS).

In a third situation, the IP session is terminated by reasons such as the loss of carrier and link quality failure.

Then, termination of the subscriber session group is triggered: after the PPP session or the IP session is terminated, the IP edge device (BNG/BRAS) triggers the following procedure for terminating the subscriber session group.

Other steps are similar to Steps S203 to S207 in FIG. 6, so the details will not be described herein again.

In the roaming scenario, data transmission in the data plane for the subscriber session group constituted by at least one IP session and at least one PPP session is shown in FIG. 18. Referring to FIG. 18, the at least one IP session and the at least one PPP session are separated from each other, and are separately transmitted.

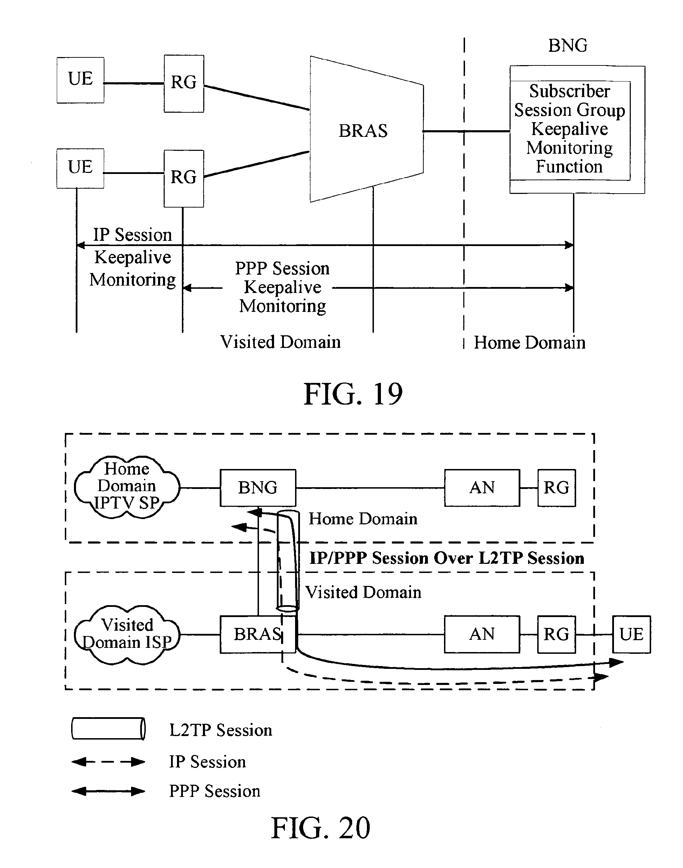

In the roaming scenario, a keep-alive monitoring mechanism of the subscriber session group constituted by at least one IP session and at least one PPP session in the control plane is shown in FIG. 19. The subscriber session group may use a keep-alive monitoring mechanism of a PPP session or an IP session as a keep-alive monitoring mechanism thereof.

In the roaming scenario, a keep-alive monitoring process for the subscriber session group constituted by at least one IP session and at least one PPP session in the control plane corresponding to FIG. 19 is compared with that described in FIG. 10.

In this embodiment, firstly, optionally, the IP edge device, such as the BNG in the figure, delivers a session group keep-alive monitoring request to initiate keep-alive monitoring on the PPP session or the IP session, which may be completed by using an L2C message.

Other steps are similar to Steps S302 to S309 in FIG. 10, so the details will not be described herein again.

In the roaming scenario, the keep-alive monitoring process for the subscriber session group constituted by at least one IP session and at least one PPP session in the control plane corresponding to FIG. 19 is compared with that described in FIG. 11.

In this embodiment, firstly, the PPP session or the IP session is terminated, which is the same as the related description in the fourth embodiment.

Other steps are similar to Steps S402 to S408 in FIG. 11, so the details will not be described herein again.

In a fifth embodiment, the present invention further provides a method for performing keep-alive monitoring on subscriber sessions, which is only applicable to a roaming scenario. The method includes the following steps.

In Step S51, a plurality of subscriber sessions on one or more physical lines (including wired or wireless lines) between an AN and a user terminal is grouped into a subscriber session group.

The subscriber sessions in the subscriber session group may include a plurality of IP sessions or a plurality of PPP sessions, or include at least one IP session and at least one PPP session.

Detailed description is similar to the related description in the fourth embodiment.

In Step S52, in a data plane, the subscriber sessions in the subscriber session group are separately transmitted; the subscriber session group are borne on an L2TP session between a visited domain edge device and a home domain edge device, and the subscriber session group is bound to the L2TP session; and all the subscriber sessions in the subscriber session group are terminated at the home domain edge device; and in a control plane, a keep-alive monitoring mechanism of a subscriber session in the subscriber session group serves as a keep-alive monitoring mechanism of the subscriber session group between the visited domain edge device and a user terminal, and keep-alive monitoring is performed on the subscriber session group; and/or a keep-alive monitoring mechanism of the L2TP session bearing the subscriber session group serves as a keep-alive monitoring mechanism of the subscriber session group between the visited domain edge device and the home domain edge device, and keep-alive monitoring is performed on the subscriber session group. A keep-alive monitoring result of the subscriber session group serves as a keep-alive monitoring result of each subscriber session in the subscriber session group.

When it is monitored that at least one PPP or IP session in the subscriber session group is abnormal or terminated, or the L2TP session bearing the subscriber session group is abnormal or terminated, charging for all the subscriber sessions in the subscriber session group is stopped, IP addresses associated with all the subscriber sessions in the subscriber session group are released, and/or all the subscriber sessions in the subscriber session group are terminated.

In the roaming scenario, data transmission in the data plane for the subscriber session group constituted by at least one IP session and at least one PPP session is shown in FIG. 20. Referring to FIG. 20, the at least one IP session and the at least one PPP session are separated from each other, and are separately transmitted; and the at least one IP session and the at least one PPP session may also be borne on an L2TP session, that is, the subscriber session group is bound to the L2TP connection.

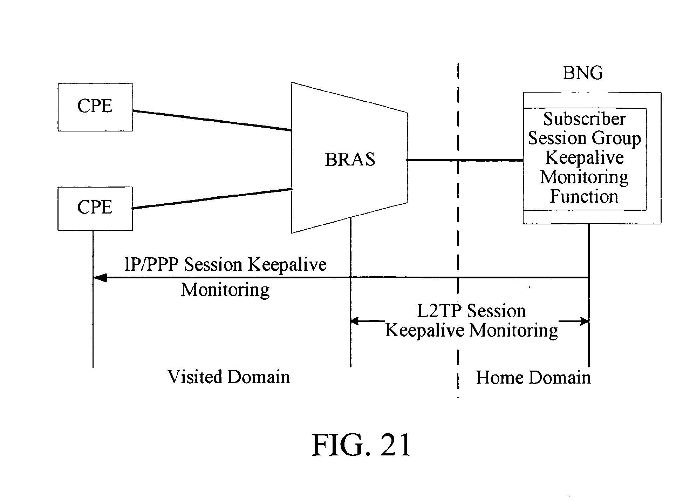

In the roaming scenario, in the control plane, a keep-alive monitoring mechanism corresponding to the subscriber session group constituted by at least one IP session and at least one PPP session is shown in FIG. 21. Referring to FIG. 21, the at least one IP session and the at least one PPP session are separately transmitted; and a keep-alive monitoring mechanism of the L2TP session bearing the subscriber session group serves as a keep-alive monitoring mechanism of the subscriber session group between the visited domain edge device and the home domain edge device, and keep-alive monitoring is performed on the subscriber session group.

In the roaming scenario, specific keep-alive monitoring processes corresponding to the keep-alive monitoring mechanism as shown in FIG. 21 is shown in FIGs. 15 and 16. For detailed description, reference is made to the related description in the third embodiment.

In a sixth embodiment, the present invention provides a system for performing keep-alive monitoring on subscriber sessions, which includes an edge device and a server.

The edge device is configured to group a plurality of subscriber sessions on one or more physical lines between an AN and a user terminal into a subscriber session group, perform keep-alive monitoring on the subscriber session group, and use a keep-alive monitoring result of the subscriber session group as a keep-alive monitoring result of each subscriber session in the subscriber session group. The specific implementation is similar to the related description in the embodiments of the method, so the details will not be described herein again.

The server is configured to terminate services associated with the subscriber session group according to the keep-alive monitoring result of the edge device. The specific implementation is similar to the related description in the embodiments of the method, so the details will not be described herein again.

In a seventh embodiment, the present invention provides an edge device, which includes a first control unit and a first monitoring unit, and may further include a second control unit and a first data transmission unit.

The first control unit is configured to group a plurality of subscriber sessions on one or more physical lines between an AN and a user terminal into a subscriber session group. The subscriber sessions include a plurality of PPP sessions, or include at least one IP session and at least one PPP session.

The first monitoring unit is configured to use a keep-alive monitoring mechanism of a PPP session bearing the subscriber session group as a keep-alive monitoring mechanism of the subscriber session group in a control plane, and perform keep-alive monitoring on the subscriber session group based on the keep-alive monitoring mechanism. The specific implementation is similar to the related description in the embodiments of the method, so the details will not be described herein again.

The second control unit is configured to stop charging for all the subscriber sessions in the subscriber session group when the keep-alive monitoring result of the first monitoring unit indicates that the PPP session bearing the subscriber session group is abnormal or terminated, release IP addresses associated with all the subscriber sessions in the subscriber session group, and/or terminate all the subscriber sessions in the subscriber session group. The specific implementation is similar to the related description in the embodiments of the method, so the details will not be described herein again.

The first data transmission unit is configured to bear the subscriber session group on a PPP session in the subscriber session group in a data plane, and bind the subscriber session group to the PPP session bearing the subscriber session group; and terminate all the subscriber sessions in the subscriber session group, or terminate the remaining subscriber sessions having not been terminated at a visited domain edge device. The specific implementation is similar to the related description in the embodiments of the method, so the details will not be described herein again.

The edge device may also include a first control unit, a first monitoring unit, a second control unit, and a second data transmission unit. Here, the first control unit, the first monitoring unit, and the second control unit have the same functions as those described in the seventh embodiment, so the details will not be described herein again. The second data transmission unit is configured to bear the subscriber session group on a PPP session in the subscriber session group in a data plane, and bind the subscriber session group to the PPP session bearing the subscriber session group; and terminate the PPP session bearing the subscriber session group. The specific implementation is similar to the related description in the embodiments of the method, so the details will not be described herein again.

The edge device may also include a first control unit, a first monitoring unit, a second control unit, and a third data transmission unit. Here, the first control unit, the first monitoring unit, and the second control unit have the same functions as those described in the seventh embodiment, so the details will not be described herein again. The third data transmission unit is configured to bear the subscriber session group on a PPP session in the subscriber session group between a visited domain edge device and a user terminal in a data plane, and terminate the PPP session bearing the subscriber session group at the visited domain edge device; bind the PPP session bearing the subscriber session group to an L2TP session; and bind the subscriber session group to the PPP session bearing the subscriber session group. The specific implementation is similar to the related description in the embodiments of the method, so the details will not be described herein again.

The edge device may also include a first control unit, a first monitoring unit, a second control unit, and a fourth data transmission unit. Here, the first control unit, the first monitoring unit, and the second control unit have the same functions as those described in the seventh embodiment, so the details will not be described herein again. The fourth data transmission unit is configured to bear the subscriber session group on a PPP session in the subscriber session group between a visited domain edge device and a user terminal in a data plane; bind the PPP session bearing the subscriber session group to an L2TP session bearing the PPP session; and bind the subscriber session group to the PPP session bearing the subscriber session group. The specific implementation is similar to the related description in the embodiments of the method, so the details will not be described herein again.

In an eighth embodiment, the present invention further provides an edge device, which includes a third control unit and a second monitoring unit, and may further include a fourth control unit and a fifth data transmission unit.

The third control unit is configured to group a plurality of subscriber sessions on one or more physical lines between an AN and a user terminal into a subscriber session group. The subscriber sessions include a plurality of PPP sessions, or include at least one IP session and at least one PPP session.

The second monitoring unit is configured to use a keep-alive monitoring mechanism of an L2TP session bearing the subscriber session group as a keep-alive monitoring mechanism of the subscriber session group between a visited domain edge device and a home domain edge device in a control plane, perform keep-alive monitoring on the subscriber session group based on the keep-alive monitoring mechanism, and use a keep-alive monitoring result of the subscriber session group as a keep-alive monitoring result of each subscriber session in the subscriber session group. The specific implementation is similar to the related description in the embodiments of the method, so the details will not be described herein again.

The fourth control unit is configured to stop charging for all the subscriber sessions in the subscriber session group when the keep-alive monitoring result of the second monitoring unit indicates that the L2TP session bearing the subscriber session group is abnormal or terminated, release IP addresses associated with all the subscriber sessions in the subscriber session group, and/or terminate all the subscriber sessions in the subscriber session group.

The fifth data transmission unit is configured to bear the remaining subscriber sessions in the subscriber session group having not been terminated at the visited domain edge device on an L2TP session between the visited domain edge device and the home domain edge device in a data plane, and terminate the remaining subscriber sessions at the home domain edge device. The specific implementation is similar to the related description in the embodiments of the method, so the details will not be described herein again.

The edge device may also include a third control unit, a second monitoring unit, a fourth control unit, and a sixth data transmission unit. Here, the third control unit, the second monitoring unit, and the fourth control unit have the same functions as the corresponding units in the eighth embodiment, so the details will not be described herein again. The sixth data transmission unit is configured to bear a PPP session bearing the subscriber session group on an L2TP session between the visited domain edge device and the home domain edge device in a data plane, and terminate all the subscriber sessions in the subscriber session group at the home domain edge device. The specific implementation is similar to the related description in the embodiments of the method, so the details will not be described herein again.

The edge device may also include a third control unit, a second monitoring unit, a fourth control unit, and a seventh data transmission unit. Here, the third control unit, the second monitoring unit, and the fourth control unit have the same functions as the corresponding units in the eighth embodiment, so the details will not be described herein again. The seventh data transmission unit is configured to separately transmit the subscriber sessions in the subscriber session group in a data plane; bear the subscriber sessions in the subscriber session group on an L2TP session between the visited domain edge device and the home domain edge device, and bind the subscriber session group to the L2TP session; and terminate all the subscriber sessions in the subscriber session group at the home domain edge device. The specific implementation is similar to the related description in the embodiments of the method, so the details will not be described herein again.

In a ninth embodiment, the present invention further provides an edge device, which includes a fifth control unit and a third monitoring unit, and may further include a sixth control unit and an eighth data transmission unit.

The fifth control unit is configured to group a plurality of subscriber sessions on one or more physical lines between an AN and a user terminal into a subscriber session group. The subscriber sessions include a plurality of IP sessions or a plurality of PPP sessions, or include at least one IP session and at least one PPP session.

The third monitoring unit is configured to use a keep-alive monitoring mechanism of a subscriber session in the subscriber session group as a keep-alive monitoring mechanism of the subscriber session group in a control plane, and perform keep-alive monitoring on the subscriber session group based on the keep-alive monitoring mechanism. The specific implementation is similar to the related description in the embodiments of the method, so the details will not be described herein again.

The sixth control unit is configured to stop charging for all the subscriber sessions in the subscriber session group when the keep-alive monitoring result of the third monitoring unit indicates that the IP session and/or the PPP session in the subscriber session group is abnormal or terminated, release IP addresses associated with all the subscriber sessions in the subscriber session group, and/or terminate all the subscriber sessions in the subscriber session group.

The eighth data transmission unit is configured to separately transmit the subscriber sessions in the subscriber session group in a data plane, and terminate all the subscriber sessions in the subscriber session group at a home domain edge device. The specific implementation is similar to the related description in the embodiments of the method, so the details will not be described herein again.

In order to make the keep-alive monitoring function based on the subscriber session group more comprehensive, the assumption in the prior art is used. When the keep-alive monitoring mechanism based on the subscriber session group is introduced, it is assumed that every four subscriber sessions constitute a subscriber session group, and a keep-alive monitoring period for each subscriber session group is one minute. Typically, the monitoring period of the keep-alive monitoring mechanism based on each subscriber session may be increased to four minutes, and at this time, each IP edge device only needs to send 10,000,000 subscriber session keep-alive monitoring messages per minute. That is, the traffic of the subscriber session keep-alive monitoring messages is decreased by half as compared with the prior art. The more subscriber sessions that each subscriber session group contains, the greater the decrease in the traffic of the keep-alive monitoring messages will be. It can be seen from the technical solutions of the present invention that, keep-alive monitoring is performed on a subscriber session group, and a keep-alive monitoring result of the subscriber session group serves as a keep-alive monitoring result of a plurality of subscriber sessions in the subscriber session group, so that the subscriber sessions in the subscriber session group can be processed in batches, and the real-time processing traffic of an IP edge device for the subscriber sessions is reduced, thereby lowering the real-time processing load of the IP edge device for the subscriber sessions, and increasing the real-time processing rate of the IP edge device for the subscriber sessions.

It will be apparent to those skilled in the art that various modifications and variations can be made to the present invention without departing from the scope of the invention, as defined in the appended claims.

## Claims

1. A method for performing keep-alive monitoring on subscriber sessions, the method comprising:
grouping (S11) at least two subscriber sessions on at least one physical line between an access node, AN, and a user terminal into a subscriber session group,
performing (S12) keep-alive monitoring on the subscriber session group, the method being **characterized in that**: the at least two subscriber sessions comprise: at least two PPP sessions; or at least one IP session and at least one PPP session;
the performing keep-alive monitoring on the subscriber session group comprises:
bearing the subscriber session group on a Point-to-Point Protocol, PPP, session in the subscriber session group in a data plane between a visited domain edge device and the user terminal;
bearing the PPP session bearing the subscriber session group on a Layer 2 Tunnel Protocol, L2TP, session in the data plane between the visited domain edge device and a home domain edge device;
terminating all the subscriber sessions in the subscriber session group at the home domain edge device;
binding the PPP session bearing the subscriber session group to the L2TP session; and
binding the subscriber session group to the PPP session bearing the subscriber session group;
using (S12) a keep-alive monitoring result of the subscriber session group as a keep-alive monitoring result of each subscriber session in the subscriber session group,
wherein the performing keep-alive monitoring on the subscriber session group comprises:
using a keep-alive monitoring mechanism of the PPP session bearing the subscriber session group as a keep-alive monitoring mechanism of the subscriber session group between the visited domain edge device and the user terminal in a control plane, and
performing keep-alive monitoring on the subscriber session group; and/or
using a keep-alive monitoring mechanism of the Layer 2 Tunnel Protocol, L2TP, session bearing the subscriber session group as a keep-alive monitoring mechanism of the subscriber session group between the visited domain edge device and the home domain edge device, and performing keep-alive monitoring on the subscriber session group.

2. The method according to claim 1, by further comprising:
stopping (104) charging for all the subscriber sessions in the subscriber session group when the keep-alive monitoring result of the subscriber session group indicates that the subscriber session group is abnormal;
releasing (106) Internet Protocol, IP, addresses associated with all the subscriber sessions in the subscriber session group; and/or
terminating (107) all the subscriber sessions in the subscriber session group.

3. A system for performing keep-alive monitoring on subscriber sessions, the system comprising:
a means for grouping (S11) at least two subscriber sessions on at least one physical line between an access node, AN, and a user terminal into a subscriber session group,
a means for performing (S12) keep-alive monitoring on the subscriber session group to obtain a keep-alive monitoring result of the subscriber session group by using a keep-alive monitoring mechanism of a subscriber session in the subscriber session group as a
keep-alive monitoring mechanism of the subscriber session group, the system being **characterized in that**:
the at least two subscriber sessions comprise:
at least two PPP sessions; or
at least one IP session and at least one PPP session;
the means for performing keep-alive monitoring on the subscriber session group is adapted to:
bear the subscriber session group on a Point-to-Point Protocol, PPP, session in the subscriber session group in a data plane between a visited domain edge device and
the user terminal;
bear the PPP session bearing the subscriber session group on a Layer 2 Tunnel Protocol, L2TP, session in the data plane between the visited domain edge device and a home domain edge device;
terminate all the subscriber sessions in the subscriber session group at the home domain edge device;
bind the PPP session bearing the subscriber session group to the L2TP session; and
bind the subscriber session group to the PPP session bearing the subscriber session
group;
and a means for using (S12) the keep-alive monitoring result of the subscriber session group as a keep-alive monitoring result of each subscriber session in the subscriber session group wherein the subscriber session group is borne on the subscriber session,
wherein the means for performing keep-alive monitoring on the subscriber session group is further adapted to:
use a keep-alive monitoring mechanism of the PPP session bearing the subscriber session group as a keep-alive monitoring mechanism of the subscriber session group between the visited domain edge device and the user terminal in a control plane, and perform keep-alive monitoring on the subscriber session group; and/or
use a keep-alive monitoring mechanism of the Layer 2 Tunnel Protocol, L2TP, session bearing the subscriber session group as a keep-alive monitoring mechanism of the subscriber session group between the visited domain edge device and the home domain edge device, and perform keep-alive monitoring on the subscriber session group.

## Patentansprüche

1. Verfahren zum Ausführen einer Halteüberwachung an Teilnehmersitzungen, wobei das Verfahren Folgendes umfasst:
Gruppieren (S11) von wenigstens zwei Teilnehmersitzungen auf wenigstens einer physikalischen Leitung zwischen einem Zugangsknoten, AN, und einem Anwenderendgerät in eine Teilnehmersitzungsgruppe,
Ausführen (S12) einer Halteüberwachung an der Teilnehmersitzungsgruppe, wobei das Verfahren **dadurch gekennzeichnet ist, dass**:
die wenigstens zwei Teilnehmersitzungen Folgendes umfassen:
wenigstens zwei PPP-Sitzungen; oder
wenigstens eine IP-Sitzung und wenigstens eine PPP-Sitzung;
wobei das Ausführen der Halteüberwachung an der Teilnehmersitzungsgruppe Folgendes umfasst:
Halten der Teilnehmersitzungsgruppe in einer Punkt-zu-Punkt-Protokoll-Sitzung, PPP-Sitzung, in der Teilnehmersitzungsgruppe in einer Datenebene zwischen einer Randvorrichtung eines besuchten Bereichs und dem Anwenderendgerät;
Halten der PPP-Sitzung, die die Teilnehmersitzungsgruppe hält, in einer Sitzung des Tunnelprotokolls der Schicht 2, L2TP-Sitzung, in der Datenebene zwischen der Randvorrichtung eines besuchten Bereichs und einer Randvorrichtung des Heimatbereichs;
Beenden aller Teilnehmersitzungen in der Teilnehmersitzungsgruppe in der Randvorrichtung des Heimatbereichs;
Binden der PPP-Sitzung, die die Teilnehmersitzungsgruppe hält, an die L2TP-Sitzung; und
Binden der Teilnehmersitzungsgruppe an die PPP-Sitzung, die die Teilnehmersitzungsgruppe hält;
Verwenden (S12) eines Halteüberwachungsergebnisses der Teilnehmersitzungsgruppe als ein Halteüberwachungsergebnis jeder Teilnehmersitzung in der Teilnehmersitzungsgruppe,
wobei das Ausführen der Halteüberwachung an der Teilnehmersitzungsgruppe Folgendes umfasst:
Verwenden eines Halteüberwachungsmechanismus der PPP-Sitzung, die die Teilnehmersitzungsgruppe hält, als einen Halteüberwachungsmechanismus der Teilnehmersitzungsgruppe zwischen der Randvorrichtung eines besuchten Bereichs und dem Anwenderendgerät in einer Steuerebene und Ausführen einer Halteüberwachung an der Teilnehmersitzungsgruppe; und/oder Verwenden eines Halteüberwachungsmechanismus der Sitzung des Tunnelprotokolls der Schicht 2, L2TP-Sitzung, die die Teilnehmersitzungsgruppe hält, als einen Halteüberwachungsmechanismus der Teilnehmersitzungsgruppe zwischen der Randvorrichtung eines besuchten Bereichs und der Randvorrichtung des Heimatbereichs und Ausführen einer Halteüberwachung an der Teilnehmersitzungsgruppe.

2. Verfahren nach Anspruch 1, das ferner Folgendes umfasst:
Anhalten (104) der Gebührenberechnung für alle Teilnehmersitzungen in der Teilnehmersitzungsgruppe, wenn das Halteüberwachungsergebnis der Teilnehmersitzungsgruppe angibt, dass die Teilnehmersitzungsgruppe anomal ist;
Freigeben (106) der Internetprotokoll-Adressen, IP-Adressen, die allen Teilnehmersitzungen in der Teilnehmersitzungsgruppe zugeordnet sind; und/oder Beenden (107) aller Teilnehmersitzungen in der Teilnehmersitzungsgruppe.

3. System zum Ausführen einer Halteüberwachung an Teilnehmersitzungen, wobei das System Folgendes umfasst:
Mittel zum Gruppieren (S11) von wenigstens zwei Teilnehmersitzungen auf wenigstens einer physikalischen Leitung zwischen einem Zugangsknoten, AN, und
einem Anwenderendgerät in eine Teilnehmersitzungsgruppe,
Mittel zum Ausführen (S12) einer Halteüberwachung an der Teilnehmersitzungsgruppe, um ein Halteüberwachungsergebnis der Teilnehmersitzungsgruppe unter Verwendung eines Halteüberwachungsmechanismus einer Teilnehmersitzung in der Teilnehmersitzungsgruppe als einen Halteüberwachungsmechanismus der Teilnehmersitzungsgruppe zu erhalten, wobei das System **dadurch gekennzeichnet ist, dass**:
die wenigstens zwei Teilnehmersitzungen Folgendes umfassen:
wenigstens zwei PPP-Sitzungen; oder
wenigstens eine IP-Sitzung und wenigstens eine PPP-Sitzung;
wobei die Mittel zum Ausführen einer Halteüberwachung an der Teilnehmersitzungsgruppe dafür ausgelegt sind:
die Teilnehmersitzungsgruppe in einer Punkt-zu-Punkt-Protokoll-Sitzung, PPP-Sitzung, in der Teilnehmersitzungsgruppe in einer Datenebene zwischen einer Randvorrichtung eines besuchten Bereichs und dem Anwenderendgerät zu halten;
die PPP-Sitzung, die die Teilnehmersitzungsgruppe hält, in einer Sitzung des Tunnelprotokolls der Schicht 2, L2TP-Sitzung, in der Datenebene zwischen der Randvorrichtung eines besuchten Bereichs und einer Randvorrichtung des Heimatbereichs zu halten;
alle Teilnehmersitzungen in der Teilnehmersitzungsgruppe in der Randvorrichtung des Heimatbereichs zu beenden;
die PPP-Sitzung, die die Teilnehmersitzungsgruppe hält, an die L2TP-Sitzung zu binden; und
die Teilnehmersitzungsgruppe an die PPP-Sitzung, die die Teilnehmersitzungsgruppe hält, zu binden;
und Mittel zum Verwenden (S12) des Halteüberwachungsergebnisses der Teilnehmersitzungsgruppe als ein Halteüberwachungsergebnis jeder Teilnehmersitzung in der Teilnehmersitzungsgruppe, wobei die Teilnehmersitzungsgruppe in der Teilnehmersitzung gehalten ist,
wobei die Mittel zum Ausführen einer Halteüberwachung an der Teilnehmersitzungsgruppe ferner dafür ausgelegt sind:
einen Halteüberwachungsmechanismus der PPP-Sitzung, die die Teilnehmersitzungsgruppe hält, als einen Halteüberwachungsmechanismus der Teilnehmersitzungsgruppe zwischen der Randvorrichtung eines besuchten Bereichs und dem Anwenderendgerät in einer Steuerebene zu verwenden und eine Halteüberwachung an der Teilnehmersitzungsgruppe auszuführen; und/oder einen Halteüberwachungsmechanismus der Sitzung des Tunnelprotokolls der Schicht 2, L2TP-Sitzung, die die Teilnehmersitzungsgruppe hält, als einen Halteüberwachungsmechanismus der Teilnehmersitzungsgruppe zwischen der Randvorrichtung eines besuchten Bereichs und der Randvorrichtung des Heimatbereichs zu verwenden und eine Halteüberwachung an der Teilnehmersitzungsgruppe auszuführen.

## Revendications

1. Procédé permettant d'effectuer une surveillance de maintien de connexion sur des sessions d'abonnés, le procédé comprenant :
le regroupement (S11) d'au moins deux sessions d'abonnés sur au moins une ligne physique entre un noeud d'accès, AN, et un terminal utilisateur dans un groupe de sessions d'abonnés,
l'exécution (S12) d'une surveillance de maintien de connexion sur le groupe de sessions d'abonnés, le procédé étant **caractérisé en ce que** :
les au moins deux sessions d'abonnés comprennent :
au moins deux sessions à un protocole de point à point (PPP), ou
au moins une session au protocole Internet (IP) et au moins une session au protocole PPP,
l'exécution de la surveillance de maintien de connexion sur le groupe de sessions d'abonnés comprend :
le transport du groupe de sessions d'abonnés sur une session au protocole de point à point, PPP, dans le groupe de sessions d'abonnés dans un plan de données entre un dispositif en bordure du domaine visité et le terminal utilisateur,
le transport de la session au protocole PPP portant le groupe de sessions d'abonnés sur une session au protocole de mise sous tunnel de niveau 2, L2TP, dans le plan de données entre le dispositif en bordure du domaine visité et un dispositif en bordure du domaine domestique,
la fin de toutes les sessions d'abonnés dans le groupe de sessions d'abonnés au niveau du dispositif en bordure du domaine domestique,
l'établissement d'une liaison de la session au protocole PPP portant le groupe de sessions d'abonnés à la session au protocole L2TP, et
l'établissement d'une liaison du groupe de sessions d'abonnés à la session au protocole PPP portant le groupe de sessions d'abonnés,
l'utilisation (S12) du résultat de surveillance de maintien de connexion pour le groupe de sessions d'abonnés comme étant un résultat de surveillance de maintien de connexion pour chaque session d'abonné dans le groupe de sessions d'abonnés,
dans lequel l'exécution de la surveillance de maintien de connexion sur le groupe de sessions d'abonnés comprend :
l'utilisation d'un mécanisme de surveillance de maintien de connexion pour la session au protocole PPP portant le groupe de sessions d'abonnés comme mécanisme de surveillance de maintien de connexion pour le groupe de sessions d'abonnés entre le dispositif en bordure du domaine visité et le terminal utilisateur dans un plan de commande, et l'exécution d'une surveillance de maintien de connexion sur le groupe de sessions d'abonnés, et/ou
l'utilisation d'un mécanisme de surveillance de maintien de connexion pour la session au protocole de mise sous tunnel de niveau 2, L2TP, portant le groupe de sessions d'abonnés comme mécanisme de surveillance de maintien de connexion du groupe de sessions d'abonnés entre le dispositif en bordure du domaine visité et le dispositif en bordure du domaine domestique, et l'exécution d'une surveillance de maintien de connexion sur le groupe de sessions d'abonnés.

2. Procédé selon la revendication 1, comprenant en outre :
l'arrêt (104) de l'imputation pour toutes les sessions d'abonnés dans le groupe de sessions d'abonnés lorsque le résultat de surveillance de maintien de connexion du groupe de sessions d'abonnés indique que le groupe de sessions d'abonnés est anormal,
la libération (106) d'adresses au protocole Internet, IP, associées à toutes les sessions d'abonnés dans le groupe de sessions d'abonnés, et/ou
la fin (107) de toutes les sessions d'abonnés dans le groupe de sessions d'abonnés.

3. Système permettant d'effectuer une surveillance de maintien de connexion sur des sessions d'abonnés, le système comprenant :
un moyen de regroupement (S11) d'au moins deux sessions d'abonnés sur au moins une ligne physique entre un noeud d'accès, AN, et un terminal utilisateur dans un groupe de sessions d'abonnés,
un moyen d'exécution (S12) d'une surveillance de maintien de connexion sur le groupe de sessions d'abonnés afin d'obtenir un résultat de surveillance de maintien de connexion du groupe de sessions d'abonnés en utilisant un mécanisme de surveillance de maintien de connexion pour une session d'abonné dans le groupe de sessions d'abonnés comme mécanisme de surveillance de maintien de connexion pour le groupe de sessions d'abonnés, le système étant **caractérisé en ce que** :
les au moins deux sessions d'abonnés comprennent :
au moins deux sessions à un protocole de point à point (PPP), ou
au moins une session au protocole Internet (IP) et au moins une session au protocole PPP,
le moyen d'exécution de la surveillance de maintien de connexion sur le groupe de sessions d'abonnés est conçu pour :
transporter le groupe de sessions d'abonnés sur une session au protocole de point à point, PPP, dans le groupe de sessions d'abonnés dans un plan de données entre un dispositif en bordure du domaine visité et le terminal utilisateur,
transporter la session au protocole PPP portant le groupe de sessions d'abonnés sur une session au protocole de mise sous tunnel de niveau 2, L2TP, dans le plan de données entre le dispositif en bordure du domaine visité et un dispositif en bordure du domaine domestique,
terminer toutes les sessions d'abonnés dans le groupe de sessions d'abonnés au niveau du dispositif en bordure du domaine domestique,
lier la session au protocole PPP portant le groupe de sessions d'abonnés à la session au protocole L2TP, et
lier le groupe de sessions d'abonnés à la session au protocole PPP portant le groupe de sessions d'abonnés,
ainsi qu'un moyen destiné à utiliser (S12) le résultat de surveillance de maintien de connexion pour le groupe de sessions d'abonnés comme étant un résultat de surveillance de maintien de connexion pour chaque session d'abonné dans le groupe de sessions d'abonnés, le groupe de sessions d'abonnés étant transporté sur la session d'abonné,
dans lequel le moyen d'exécution de la surveillance de maintien de connexion sur le groupe de sessions d'abonnés est en outre conçu pour :
utiliser un mécanisme de surveillance de maintien de connexion pour la session au protocole PPP portant le groupe de sessions d'abonnés comme mécanisme de surveillance de maintien de connexion pour le groupe de sessions d'abonnés entre le dispositif en bordure du domaine visité et le terminal utilisateur dans un plan de commande, et exécuter une surveillance de maintien de connexion sur le groupe de sessions d'abonnés, et/ou
utiliser un mécanisme de surveillance de maintien de connexion pour la session au protocole de mise sous tunnel de niveau 2, L2TP, portant le groupe de sessions d'abonnés comme mécanisme de surveillance de maintien de connexion du groupe de sessions d'abonnés entre le dispositif en bordure du domaine visité et le dispositif en bordure du domaine domestique, et exécuter une surveillance de maintien de connexion sur le groupe de sessions d'abonnés.
